# EUROPÄISCHE PATENTSCHRIFT

(11) **EP 4 300 221 B1**
(45) Veröffentlichungstag und Bekanntmachung des Hinweises auf die Patenterteilung: **27.08.2025**
(21) Anmeldenummer: 22182570.6
(22) Anmeldetag: 01.07.2022
(51) Int. Cl.: G05B 19/042

(54) **VORRICHTUNG UND VERFAHREN ZUR STEUERUNG EINER PROZESSANLAGE SOWIE PROZESSSTEUERUNGSSYSTEM**
PROCESS CONTROL SYSTEM AND DEVICE AND METHOD FOR CONTROLLING A PROCESS SYSTEM
DISPOSITIF ET PROCÉDÉ DE COMMANDE D'UNE INSTALLATION DE PROCESSUS, AINSI QUE SYSTÈME DE COMMANDE DE PROCESSUS

(43) Veröffentlichungstag der Anmeldung: 03.01.2024
(73) Patentinhaber: Siemens Aktiengesellschaft, 80333 München (DE)
(72) Erfinder: Taschke, Ulrich, 90766 Fürth (DE); Walter, Maximilian, 90408 Nürnberg (DE)
(74) Vertreter: Siemens Patent Attorneys

(56) Entgegenhaltungen:
- EP-A1- 3 975 016
- DE-A1- 102010 037 457
- DE-A1- 102018 120 347
- US-A1- 2009 249 034
- US-B2- 11 169 501

## Beschreibung

Die vorliegende Erfindung betrifft eine Vorrichtung sowie ein Verfahren zur Steuerung einer Prozessanlage. Die vorliegende Erfindung betrifft ferner ein Prozesssteuerungssystem mit einer solchen Vorrichtung zur Steuerung einer Prozessanlage.

Konventionelle Industrieanlagen verfügen bisher häufig über Automatisierungsanlagen mit individuellen physischen Steuerungen. In jüngster Zeit ist eine Tendenz zu beobachten, diese separaten physischen Steuerungen von Industrieanlagen auf sogenannten Hyper-konvergenten Infrastrukturen auszuführen. Die einzelnen Feldgeräte einer solchen Anlage können dabei über ein Netzwerk an dieser Infrastruktur angebunden sein. Hierbei können auf einer gemeinsamen Hardwareplattform mehrere Steuerungsprozesse für separate Gruppen von Feldgeräten ausgeführt werden.

Aus Sicherheitsaspekten muss gegebenenfalls bei der Ausführung der Steuerungsprozesse gewährleistet werden, dass die Steuerungsprozesse stets auf korrekte Daten zugreifen. Hierzu können beispielsweise Sicherheitsfunktionen implementiert werden, um mit Hilfe einer kodierten Verarbeitung (Coded Processing) die Integrität der Daten zu gewährleisten.

Die EP 3 975 016 A1 offenbart ein Verfahren, eine Einrichtung und ein Computerprogrammprodukt zur Sicherung von Zugriffen auf codierte Variablen in einem Computerprogramm. Das Hauptproblem, das die Erfindung adressiert, ist die Erkennung und Verwaltung von Bitfehlern in sicherheitsgerichteten Programmen, insbesondere in komplexen industriellen Automatisierungsanwendungen.

Die US 2009/0249034A1 beschreibt eine Methode und Vorrichtung zur Signaturgenerierung in einem Prozessor, der Befehle unabhängig von der Programmreihenfolge ausführt. Das Hauptproblem, das die Erfindung anspricht, ist die Zuverlässigkeit von Computersystemen, insbesondere bei hochintegrierten LSI (Large Scale Integration), die anfällig für Störungen wie kosmische Strahlung sind. Traditionelle Methoden zur Fehlerkorrektur, wie das Vergleichen von Ausführungsergebnissen mehrerer Prozessoren, sind zeitaufwendig und beeinträchtigen die Systemleistung.

Die DE 10 2010 037 457 A1 behandelt ein Verfahren und eine Datenverarbeitungsanordnungen zur zuverlässigen Erkennung von Fehlern während der Ausführung eines Programms. Das Hauptproblem, das die Erfindung adressiert, ist die zunehmende Unzuverlässigkeit von Standard-Hardware aufgrund steigender Integrationsdichte und schrumpfender Strukturbreiten. Diese Hardwarefehler können zu stillen Datenfehlern führen, die schwer zu erkennen sind.

Für eine solche kodierte Verarbeitung können die einzelnen Prozesswerte über eine oder mehrere Signaturen verfügen. Beispielsweise kann eine Signatur vorgesehen sein, welche jeweils einem bestimmten Prozesswert zugeordnet wird. Diese Signatur kann einmalig, beispielsweise bei einer Kodierung des Steuerungsprogrammes erstellt werden und bleibt daraufhin über die Zeit unverändert. Eine solche Signatur wird beispielsweise auch als sogenannte "B-Signatur" bezeichnet. Somit kann auf einfache Weise ein Vertauschen von Prozesswerten erkannt werden

Ferner kann eine weitere Signatur vorgesehen sein, welche für alle Prozesswerte gleich ist, sich jedoch bei einer zyklischen Verarbeitung eines Steuerungsprozesses in jedem Zyklus bzw. Schleifendurchlauf ändert. Eine solche Signatur wird gegebenenfalls auch als sogenannte "D-Signatur" bezeichnet. Da sich diese Signatur in jedem Zyklus bzw. Schleifendurchlauf ändert, können hierdurch veraltete Prozesswerte mit hoher Wahrscheinlichkeit identifiziert werden.

Die beschriebenen Signaturen können sowohl in Systemen mit individuellen physikalischen Steuerungen, als auch bei Steuerungsprozesse in einer Hyper-konvergenten Infrastruktur verwendet werden. Sollen in Hyper-konvergenten Infrastrukturen mehrere gleiche Steuerungsprozesse auf einer gemeinsamen Hardwareplattform ausgeführt werden, so kann beispielsweise eine einmalig kodierte Software mehrfach ausgeführt werden. Mit anderen Worten, es können hierzu mehrere Instanzen einer gleichen Software mehrfach auf demselben Host virtualisiert werden.

Wird jedoch das einmal kodierte gleiche Anwendungsprogramm mehrfach auf einem Hostsystem ausgeführt, so ist beispielsweise das Erkennen eines Vertauschens von Prozesswerten zwischen den unterschiedlichen Instanzen auf Grundlage der oben beschriebenen B-Signatur nicht mehr möglich. Vielmehr müssten hierbei die entsprechenden Anwenderprogramme für jede Instanz individuell parametrisiert und kodiert werden.

Vor diesem Hintergrund ist es wünschenswert, eine Lösung zu schaffen, welche es ermöglicht, ein einmal kodiertes Programm mehrfach auf einer gemeinsamen Hardware auszuführen, wobei eine ausreichend sichere und zuverlässige Überwachung von kodierten Prozesswerten realisiert werden kann.

Die vorliegende Erfindung schafft eine Vorrichtung und ein Verfahren zur Steuerung einer Prozessanlage sowie ein Prozesssteuerungssystem mit den Merkmalen der unabhängigen Patentansprüche. Weitere vorteilhafte Ausführungsformen sind Gegenstand der abhängigen Patentansprüche.

Gemäß einem ersten Aspekt ist eine Vorrichtung zur Steuerung einer Prozessanlage nach Anspruch 1 vorgesehen.

Gemäß einem weiteren Aspekt ist ein Prozesssteuerungssystem vorgesehen. Das Prozesssteuerungssystem umfasst eine erfindungsgemäße Vorrichtung zur Steuerung einer Prozessanlage. Ferner umfasst das Prozesssteuerungssystem mehrere Feldgerä**te.** Jedes der Feldgeräte umfasst mindestens einen Sensor und/oder Aktor. Hierbei sind die Steuerungsprozesse der Steuervorrichtung jeweils dazu ausgelegt, Steuerbefehle unter Verwendung von Sensorwerten der Feldgeräte zu generieren und/oder Steuerbefehle an die Feldgeräte zu senden.

Gemäß noch einem weiteren Aspekt ist ein Verfahren zur Steuerung einer Prozessanlage nach Anspruch 11 vorgesehen.

Die vorliegende Erfindung basiert auf der Erkenntnis, dass beispielsweise in Hyper-konvergenten Infrastrukturen mehrere Steuerungsprozesse auf einer gemeinsamen Hardware ausgeführt werden können. Hierzu ist für jeden Steuerungsprozess ein Anwendungsprogramm erforderlich, welches auf Grundlage eines Quellcodes generiert werden muss. Sind in dem Anwendungsprogramm die Parameter für eine kodierte Verarbeitung von Prozesswerten fest vorgegeben, so ist es unter Umständen nicht möglich, kodierte Prozesswerte von unterschiedlichen Softwareinstanzen zu unterscheiden, falls die einzelnen Steuerungsprozesse das gleiche kodierte Anwendungsprogramm nutzen.

Vor diesem Hintergrund ist es eine Idee der vorliegenden Erfindung, in einem einmalig generierten Anwendungsprogramm eine Möglichkeit vorzusehen, wodurch unterschiedliche Steuerungsprozesse in die Lage versetzt werden, zwischen kodierten Prozesswerten unterschiedlicher Steuerungsprozesse zu unterscheiden.

Die vorliegende Erfindung macht sich dabei zunutze, dass die Steuerungsprozesse durch zyklisches Abarbeiten einer Schleife ausgeführt werden, wobei zumindest ein Teil der für kodierte Prozesswerte genutzten Signatur von dem jeweiligen Schleifendurchlauf abhängig ist. Insbesondere ist es erfindungsgemäß vorgesehen, in einem generierten Anwendungsprogramm eine Möglichkeit vorzusehen, wodurch ein initialer Startwert oder ein Inkrement für ein schleifenabhängiges Erstellen einer Signatur für einen kodierte Prozesswerte individuell angepasst werden kann. Werden für dieses Anpassen zufällige Werte oder spezifische Werte des jeweiligen Steuerungsprozesses verwendet, so können in jedem Steuerungsprozessunterschiedliche Signaturen für die kodierten Prozesswerte generiert werden.

Wie im Nachfolgenden noch näher ausgeführt wird, können für die Wahl des initialen Startwerts/oder des zyklischen Inkrements verschiedene Ansätze genutzt werden, um für die Signaturen in den Steuerungsprozessen möglichst unterschiedliche Werte zu erhalten.

Somit ist es möglich, auf einer Hardware mehrere virtuelle Instanzen für Steuerungen von Anlagen zu implementieren, wobei für jede der virtuellen Instanzen das gleiche einmal generierte Anwendungsprogramm genutzt werden kann. Ein Anpassen und neues Generieren des Anwendungsprogramms ist dabei nicht erforderlich. Dennoch kann aufgrund des individuellen Anpassens für einen Initialwert und/oder ein Inkrement in den einzelnen Anwendungsprogrammen jeweils eine individuelle Signatur für kodierte Prozesswerte generiert werden. Dies ermöglicht auch bei der mehrfachen Nutzung eines einmalig generierten Anwendungsprogramms eine individuelle Kodierung von Prozesswerten und ein Unterscheiden der kodierten Prozesswerte aus den einzelnen Anwendungsprogrammen.

Da somit das individuelle Parametrisierungen und Übersetzen der Anwendungsprogramme für die einzelnen Instanzen der Steuerungsprozesse entfallen kann, kann ein Steuerungssystem mit einer derartiges Hyper-konvergenten Infrastruktur, bei der mehrere Steuerungsprozesse als virtuelle Anwendungen auf einer gemeinsamen Hardware ausgeführt werden, sehr einfach und schnell implementiert werden.

Gemäß einer Ausführungsform umfasst die Vorrichtung zur Steuerung der Prozessanlage eine Speichereinrichtung. Die Speichereinrichtung ist dazu ausgelegt, Initialwerte und/oder zyklische Inkremente für die mehreren Steuerungsprozesse remanent zu speichern und bereitzustellen. Mit anderen Worten, die in der Speichereinrichtung abgelegten Daten für Initialwerte und/oder zyklische Inkremente gehen auch bei einem Abschalten bzw. Ausfall der Versorgungsspannung nicht verloren. Die Steuerungsprozesse sind hierbei dazu ausgelegt, bei einer erstmaligen Initialisierung den Initialwerte und/oder das zyklische Inkrement zu bestimmen und in der Speichereinrichtung zu speichern. Mit anderen Worten, bei der erstmaligen Inbetriebnahme/Initialisierung eines Steuerungsprozesses kann der Steuerungsprozesse einmalig den Initialwerte und/oder das zyklische Inkrement bestimmen und daraufhin in dem remanenten Speicher ablegen. Somit stehen diese Daten bei einem späteren Neustart des Systems sofort zur Verfügung und müssen nicht erneut bestimmt werden. Diese Weise können zukünftige Startvorgänge sehr rasch ausgeführt werden.

Gemäß einer Ausführungsform sind die Steuerungsprozesse dazu ausgelegt, bei weiteren Initialisierungen die erste Signatur unter Verwendung des in der Speichereinrichtung für den jeweiligen Steuerungsprozess gespeicherten Initialwerts und/oder einem zyklischen Inkrement zu bestimmen. Wie zuvor bereits ausgeführt, können auf diese Weise zukünftige Startvorgänge sehr rasch ausgeführt werden, da hierbei auf die zuvor einmalig ermittelten Daten zurückgegriffen wird.

Gemäß einer alternativen Ausführungsform sind die Steuerungsprozesse dazu ausgelegt, bei jeder Initialisierung den Initialwerte und/oder das zyklische Inkrement neu bestimmen. Somit ist keine remanente Speicherung von Daten für den Initialwerte oder das zyklische Inkrement erforderlich. Entsprechend kann ein solcher Aufbau besonders einfach und kostengünstig realisiert werden.

Gemäß einer Ausführungsform sind die Steuerungsprozesse dazu ausgelegt, den Initialwerte und/oder das zyklische Inkrement des jeweiligen Steuerungsprozesses unter Verwendung eines Zufallswertes zu berechnen. Die Ermittlung der hierfür erforderlichen Zufallswerte oder Pseudo-Zufallswerte kann dabei auf beliebige Weise erfolgen. Beispielsweise kann eine bestehende Softwarefunktion genutzt werden. Ebenso ist beispielsweise ein Ermitteln eines zufällig anmutenden Wertes auf Basis einer Systemzeit oder eines anderen geeigneten System- oder Sensorwertes möglich. Durch die Verwendung derartiger Zufallswerte oder Pseudo-Zufallswerte können mit sehr hoher Wahrscheinlichkeit unterschiedliche Werte für den Initialwerte und/oder das zyklische Inkrement der einzelnen Steuerungsprozesse ermittelt werden.

Gemäß einer Ausführungsform sind die Steuerungsprozesse dazu ausgelegt, den Initialwerte und/oder das zyklische Inkrement des jeweiligen Steuerungsprozesses unter Verwendung einer Hardware-Eigenschaft und/oder einer Software-Eigenschaft des jeweiligen Steuerungsprozesses zu berechnen. Beispielsweise können die Werte auf Grundlage eines individuellen Lizenzschlüssels, einer dem Steuerungsprozess zugeordneten IP-Adresse, einen virtuellen MAC-Adresse oder einer beliebigen anderen Software- oder Hardwareeigenschaft ermittelt werden, sofern sich diese Eigenschaften für die einzelnen Steuerungsprozesse unterscheiden.

Gemäß einer Ausführungsform sind die Steuerungsprozesse jeweils dazu ausgelegt, dem mindestens einen Prozesswert eine zweite Signatur zuzuordnen. Entsprechend kann die Verarbeitung des mindestens einen Prozesswert unter Verwendung der berechneten ersten Signatur und der zweiten Signatur ausgeführt werden. Bei der zweiten Signatur kann es sich insbesondere um eine Signatur handeln, die für alle Zyklen der zyklischen Verarbeitung gleich ist. Insbesondere kann es sich hierbei um eine individuelle Signatur für jeden Prozesswert handeln, die jedoch für alle Zyklen gleich beibehalten wird. Hierdurch kann zwischen unterschiedlichen Prozesswerten unterschieden werden.

Gemäß einer Ausführungsform umfasst die Steuervorrichtung eine Verarbeitungsvorrichtung und einen Datenspeicher. Diese Verarbeitungsvorrichtung ist dazu ausgelegt, die mehreren Steuerungsprozesse auszuführen. Der Datenspeicher ist dazu ausgelegt, die Prozesswerte der mehreren Steuerungsprozesse und die korrespondierenden Signaturen für die Prozesswerte zu speichern. Mit anderen Worten, die einzelnen Steuerungsprozesse bzw. Anwendungsprogramme können durch eine gemeinsame Verarbeitungseinrichtung, wie beispielsweise ein Prozessor oder ein Multiprozessorsystem ausgeführt werden. Dabei können sämtliche Steuerungsprozesse auf einen gemeinsamen Datenspeicher, wie zum Beispiel einen gemeinsamen RAM zugreifen. Durch die kodierte Verarbeitung der Prozesswerte kann dabei sichergestellt werden, dass es zu keiner Verwechslung der Prozesswerte kommt.

Gemäß einer Ausführungsform werden die mehreren Steuerungsprozesse basierend auf einem gleichen Softwarecode ausgeführt. Mit anderen Worten, die mehreren Steuerungsprozesse basieren alle auf einem gleichen einmal generierten Anwendungsprogramm für die Steuerungsprozesse. Da hierbei für jeden Steuerungsprozess zumindest ein Teil der Signatur individuell generiert wird, können Verwechslungen zwischen den kodierten Prozesswerten der einzelnen Steuerprozesse auch dann ausgeschlossen werden, wenn keine individuelle Kodierung erfolgt.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

Weitere Merkmale und Vorteile der Erfindung werden nachfolgend anhand der Figur erläutert. Dabei zeigt:

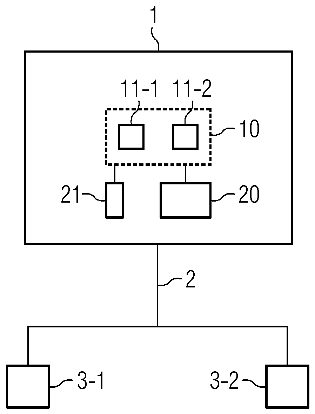

- FIG 1: eine schematische Darstellung eines Blockschaubildes eines Prozesssteuerungssystems mit einer Vorrichtung zur Steuerung einer Prozessanlage gemäß einer Ausführungsform.

Figur 1 zeigt eine schematische Darstellung eines Prinzipschaltbilds für ein Prozessorsteuerungssystem gemäß einer Ausführungsform. Dieses Prozesssteuerungssystem kann mehrere Anlagen 3-i umfassen. Jede dieser Anlagen 3-i kann als eigenständige Anlage, gesehen werden, die beispielsweise von einer eigenständigen Steuerung gesteuert werden kann. Bei solchen Anlagen kann es sich grundsätzlich um beliebige Anlagen zur Steuerung eines Prozessors, zur Fertigung von Produkten oder ähnlichem handeln. Jede dieser Anlagen 3-i kann beispielsweise eines oder mehrere Feldgeräte umfassen, welche mit einer korrespondierenden Steuerung kommunizieren kann.

In dem in Figur 1 dargestellten Prozesssteuerungssystem werden die einzelnen Anlagen 3-i jeweils von einzelnen Steuerungsprozessen 11-i gesteuert, die als Anwendungsprogramme auf einer gemeinsamen Hardware in Form einer Vorrichtung 1 zur Steuerung der Prozessanlage ausgeführt werden. Die Steuerungsprozesse 11-i der Vorrichtung 1 kommunizieren hierbei über ein Netzwerk 2 mit den Feldgeräten der einzelnen Anlagen 3-i

Auf diese Weise kann eine Hyper-konvergente Infrastruktur geschaffen werden, bei welcher die Steuerungsprozesse 11-i für mehrere Industrieanlagen 3-i in einer zentralen Hardware der Vorrichtung 1 zusammengefasst sind. Bei den Steuerungsprozesse 11-i kann es sich beispielsweise um Anwendungsprogramme handeln, welche von einer Verarbeitungseinrichtung 10, beispielsweise einem Mikroprozessor bzw. einem Multiprozessorsystem ausgeführt werden. Beispielsweise können die einzelnen Steuerungsprozesse als virtuelle Steuerungen in der zentralen Hardware der Vorrichtung 1 ausgeführt werden.

Bei den Steuerungsprozessen 11-i kann es sich hierbei insbesondere um hardwareunabhängige Anwendungsprogramme handeln. Insbesondere können die Steuerungsprozesse 11-i auf Grundlage eines gleichen einmalig generierten Anwendungsprogramms ausgeführt werden, wobei für jeden der Steuerungsprozesse 11-i das entsprechende Anwendungsprogramm einmal in der Vorrichtung 1 ausgeführt wird. Die einzelnen Steuerungsprozesse 11-i können hierbei auch auf einen gemeinsamen Speicher 20 der Vorrichtung 1 zugreifen um Daten, wie beispielsweise Prozesswerte o. ä. abzuspeichern oder auszulesen.

Aus Sicherheitsaspekten können die in dem Speicher 20 der Vorrichtung 1 gespeicherten Prozesswerte kodiert abgelegt werden. Auch die Verarbeitung dieser Prozesswerte durch die einzelnen Steuerungsprozesse 11-i kann zumindest teilweise auf Grundlage der kodierten Prozesswerte ausgeführt werden.

Für das Kodieren der Prozesswerte kann beispielsweise eine sogenannte B-Signatur vorgesehen sein, welche für jeden Prozesswert einmaligen festgelegt wird und auf deren Grundlage der jeweilige Prozesswert signiert werden kann. Somit kann durch Überprüfung dieser B-Signatur zwischen einzelnen Prozesswerten unterschieden werden.

Ferner kann eine weitere sogenannte D-Signatur vorgesehen sein, welche zwar für alle Prozesswerte eines Steuerungsprozesses 11-i gleich ist, jedoch bei jedem Zyklus des zyklisch ausgeführten Anwendungsprogrammes variiert wird. Hierzu kann beispielsweise ausgehend von einem Initialwerte beim Start des Steuerungsprozesses 11-i in jedem Zyklus des Steuerungsprogramms der Wert dieser Signatur um ein vorgegebenes Inkrement erhöht werden. Auf diese Weise kann die Aktualität der hierdurch signierten Prozesswerte überprüft werden und veraltete Prozesswerte können identifiziert werden.

Wird jedoch für mehrere Steuerungsprozesse 11-i ein gleiches einmalig generiertes Anwendungsprogramm verwendet, so sind nicht nur die B-Signaturen in allen Steuerungsprozessen 11-i für die korrespondierenden Prozesswerte gleich, sondern auch der Initialwerte und das Inkrement der D-Signatur könnten in mehreren parallelen Steuerungsprozesse 11-i gleich sein. Hierdurch besteht die Gefahr, dass ein Vertauschen von Prozesswerten zwischen den einzelnen Steuerungsprozessen 11-i, nicht zuverlässig erkannt werden kann.

Um dieser Gefahr entgegenzuwirken ist es in den Steuerungsprozesse 11-i vorgesehen jeweils einen individuellen Startwert und/oder ein individuelles Inkrement für die mit jedem Zyklus modifizierte D- Signatur vorzusehen. Auf diese Weise kann durch diese D-Signatur zwischen Prozesswerten aus unterschiedlichen Steuerungsprozesse 11-i unterschieden werden. Grundsätzlich ist es ausreichend, entweder den Initialwerte oder das Inkrement für die mit jedem Zyklus modifizierte D-Signatur für jeden Steuerungsprozesse 11-i individuell festzulegen. Darüber hinaus ist es jedoch auch möglich, beides, also sowohl den Initialwerte als auch das Inkrement für jeden der Steuerungsprozesse 11-i individuell festzulegen.

Nachfolgend werden einige Möglichkeiten zum individuellen Festlegen des Initialwerts und/oder des Inkrements für eine solche D-Signatur beschrieben.

Beispielsweise kann bei einem Start eines Steuerungsprozesses 11-i der Initialwert für die D-Signatur zufällig festgelegt werden. Hierzu sind beliebige Verfahren zur Erzeugung einer Zufallszahl oder einer Pseudo-Zufallszahl möglich. Beispielsweise kann eine solche zufällig anmutende Zahl auf Grundlage einer Zeitinformation oder eines anderen vorzugsweise komplexen variablen Werts, wie zum Beispiel einem Sensorwerte oder ähnlichem, berechnet werden. Insbesondere kann beispielsweise auch auf bereits existierende Funktionen zum Bereitstellen einer zufällig anmutenden Zahl zurückgegriffen werden. Ebenso kann alternativ oder zusätzlich auch das beschriebene Inkrement für das Modifizieren der D-Signatur bei jedem durchlaufenden Zyklus ebenfalls auf Grundlage einer Zufallszahl oder Pseudo-Zufallszahl bestimmt werden.

Darüber hinaus ist es auch möglich, den Initialwerte und/oder das Inkrement auf Grundlage beliebiger geeigneter individueller Eigenschaften der einzelnen Steuerungsprozesse 11-i zu bestimmen. Beispielsweise können die Werte auf Grundlage eines individuellen Lizenzschlüssels für jeden Steuerungsprozesse 11-i ermittelt werden. Ferner können auch andere Software- oder Hardwareeigenschaften, wie zum Beispiel eine IP-Adresse, eine virtuelle MAC-Adresse für eine virtuelle Netzwerkschnittstelle o. ä. genutzt werden. Auch individuelle Namen oder Beschreibungen der einzelnen Steuerungsprozesse 11-i können für die Generierung der Initialwerte und/oder Inkremente genutzt werden.

Die Daten für den Initialwerte sowie das Inkrement können bei jedem Neustart des Steuerungsprozesse 11-i neu bestimmt werden. Darüber hinaus ist es auch möglich, diese Werte nur einmalig bei einer ersten Initialisierung des Steuerungsprozesses 11-i zu bestimmen und daraufhin in einem remanenten Speicher 21 der Vorrichtung 1 abzuspeichern. Auf diese Weise können bei späteren Startvorgängen die in dem Speicher 21 abgespeicherten Daten ausgelesen werden, sodass ein erneutes Bestimmen dieser Werte beim Start des Steuerungsprozesses 11-i entfallen kann.

Neben den beschriebenen Möglichkeiten zur Bestimmung des Initialwerts und/oder des Inkrements beim Start eines Steuerungsprozesse 11-i ist es darüber hinaus auch möglich, das Inkrement für das Ermitteln einer neuen D-Signatur in einem neuen Zyklus für jeden Zyklus neu festzulegen. Beispielsweise kann hierzu in jedem Zyklus ein neues Inkrement auf Grundlage einer Zufallszahl o.ä. ermittelt werden. Hierdurch sind keine speziellen Maßnahmen beim erstmaligen Durchlaufen eines ersten Zyklus erforderlich.

Durch erfindungsgemäßen Ansatz ist es somit möglich, mehrere Steuerungsprozesse 11-i auf einer gemeinsamen Hardwareplattform auszuführen, wobei alle diese Steuerungsprozesse auf Grundlage des gleichen einmal generierten Anwendungsprogramms ausgeführt werden können. Durch die in den Steuerungsprozessen vorgesehene individuelle Anpassung der schleifenabhängigen D-Signatur kann dabei zwischen kodierten Prozesswerten der unterschiedlichen Steuerungsprozesse 11-i unterschieden werden.

Zusammenfassend betrifft die vorliegende Erfindung somit eine Vorrichtung und ein Verfahren zur Steuerung einer Prozessanlage, bei welcher mehrere Steuerungsprozesse auf einer gemeinsamen Hardware ausgeführt werden. Kodierte Prozessvariablen werden dabei in jedem der Steuerungsprozesse auf Grundlage von Signaturen kodiert, die in jedem der Steuerungsprozesse individuell festgelegt werden.

## Patentansprüche

1. Vorrichtung (1) zur Steuerung einer Prozessanlage, mit einer Steuervorrichtung, die dazu ausgelegt ist, mehrere Steuerungsprozesse (11-i) auf einer gemeinsamen Hardware auszuführen, wobei jeder Steuerungsprozess (11-i) eine zyklische Verarbeitung von mindestens einem Prozesswert ausführt und wobei die Steuerungsprozesse (11-i) dazu ausgelegt sind, eine erste Signatur für den mindesten einen Prozesswert zu berechnen und die Verarbeitung des mindestens einen Prozesswert unter Verwendung der berechneten ersten Signatur auszuführen, wobei die Steuerungsprozesse (11-i) dazu ausgelegt sind, die erste Signatur unter Verwendung eines vorbestimmten Initialwerts und einem zyklischen Inkrement zu berechnen,
wobei die mehreren Steuerungsprozesse (11-i) basierend auf einem gleichen Softwarecode ausgeführt werden,
wobei jeder der Steuerungsprozesse (11-i) dazu ausgelegt ist, den Initialwert und/oder das zyklische Inkrement des jeweiligen Steuerungsprozesses (11-i) individuell festzulegen.

2. Vorrichtung (1) nach Anspruch 1, mit einer Speichereinrichtung (21), die dazu ausgelegt ist, Initialwerte und/oder zyklische Inkremente für die mehreren Steuerungsprozesse (11-i) remanent zu speichern und bereitzustellen,
wobei die Steuerungsprozesse (11-i) dazu ausgelegt sind, bei einer erstmaligen Initialisierung den Initialwerte und/oder das zyklische Inkrement zu bestimmen und in der Speichereinrichtung (21) zu speichern.

3. Vorrichtung (1) nach Anspruch 2, wobei die Steuerungsprozesse (11-i) dazu ausgelegt sind, bei einer weiteren Initialisierung die erste Signatur unter Verwendung des in der Speichereinrichtung (21) für den jeweiligen Steuerungsprozess (11-i) gespeicherten Initialwerts und/oder eines zyklischen Inkrementes zu bestimmen.

4. Vorrichtung (1) nach Anspruch 1, wobei die Steuerungsprozesse (11-i) dazu ausgelegt sind, bei jeder Initialisierung den Initialwerte und/oder das zyklische Inkrement neu bestimmen.

5. Vorrichtung (1) nach einem der Ansprüche 1 bis 4, wobei die Steuerungsprozesse (11-i) dazu ausgelegt sind, den Initialwerte und/oder das zyklische Inkrement des jeweiligen Steuerungsprozesses (11-i) unter Verwendung eines Zufallswertes zu berechnen.

6. Vorrichtung (1) nach einem der Ansprüche 1 bis 4, wobei die Steuerungsprozesse (11-i) dazu ausgelegt sind, den Initialwerte und/oder das zyklische Inkrement des jeweiligen Steuerungsprozesses (11-i) unter Verwendung einer Hardware-Eigenschaft und/oder einer Software-Eigenschaft des jeweiligen Steuerungsprozesses (11-i) zu berechnen.

7. Vorrichtung (1) nach Anspruch 1, wobei die Steuerungsprozesse (11-i) dazu ausgelegt sind, das zyklische Inkrement in jedem Zyklus unter Verwendung eines neu ermittelten Zufallswerts festzulegen.

8. Vorrichtung (1) nach einem der Ansprüche 1 bis 7, wobei die Steuerungsprozesse (11-i) jeweils dazu ausgelegt sind, dem mindestens einen Prozesswert eine zweite Signatur zuzuordnen und die Verarbeitung des mindestens einen Prozesswert unter Verwendung der berechneten ersten Signatur und der zweiten Signatur auszuführen,
wobei die zweite Signatur des mindestens eines Prozesswertes für alle Zyklen der zyklischen Verarbeitung gleich ist.

9. Vorrichtung (1) nach einem der Ansprüche 1 bis 8, wobei die Steuervorrichtung eine Verarbeitungsvorrichtung (10) umfasst, die dazu ausgelegt ist, die mehreren Steuerungsprozesse (11-i) auszuführen; und
einen Datenspeicher (20), der dazu ausgelegt ist, die Prozesswerte der mehreren Steuerungsprozesse (11-i) und die korrespondierenden Signaturen für die Prozesswerte zu speichern.

10. Prozesssteuerungssystem, mit:
einer Vorrichtung (1) zur Steuerung einer Prozessanlage nach einem der Ansprüche 1 bis 9;
mehreren Feldgeräten, die jeweils mindestens einen Sensor und/oder Aktor umfassen;
wobei die Steuerungsprozesse (11-i) der Steuervorrichtung jeweils dazu ausgelegt sind, Steuerbefehle unter Verwendung von Sensorwerten der Feldgeräte zu generieren und/oder Steuerbefehle an die Feldgeräte zu senden.

11. Verfahren zur Steuerung einer Prozessanlage, wobei in einer Steuervorrichtung mehrere Steuerungsprozesse (11-i) auf einer gemeinsamen Hardware auszuführen werden, und jeder Steuerungsprozess (11-i) eine zyklische Verarbeitung von mindestens einem Prozesswert ausführt,
wobei für den mindesten einen Prozesswert in jeden Zyklus jeweils eine erste Signatur berechnet wird und die Verarbeitung des mindestens einen Prozesswert unter Verwendung der berechneten ersten Signatur ausgeführt wird,
wobei die Steuerungsprozesse (11-i) die erste Signatur unter Verwendung eines vorbestimmten Initialwerts und einem zyklischen Inkrement berechnet,
wobei die mehreren Steuerungsprozesse (11-i) basierend auf einem gleichen Softwarecode ausgeführt werden,
wobei für jeden Steuerungsprozess (11-i) der Initialwertund/oder das zyklische Inkrement des jeweiligen Steuerungsprozesses individuell festgelegt wird.

## Claims

1. Apparatus (1) for control of a process plant, with a control apparatus, which is designed to carry out a number of control processes (11-i) on common hardware, wherein each control process (11-i) carries out cyclic processing of at least one process value and wherein the control processes (11-i) are designed to compute a first signature for the at least one process value and for carrying out the processing of the at least one process value using the computed first signature, wherein the control processes (11-i) are designed to compute the first signature using a predetermined initial value and a cyclic increment,
wherein the number of control processes (11-i) are carried out based on an identical software code,
wherein each of the control processes (11-i) is designed to define the initial values and/or the cyclic increment of the respective control processes (11-i) individually.

2. Apparatus (1) according to claim 1, with a storage facility (21), which is designed to store and to provide initial values and/or cyclic increments for the number of control processes (11-i) on a remanent basis,
wherein the control processes (11-i) are designed, during a first initialisation, to determine the initial values and/or the cyclic increment and to store them in the storage facility (21).

3. Apparatus (1) according to claim 2, wherein the control processes (11-i) are designed, during a further initialisation, to determine the first signature using the initial value stored in the storage facility (21) for the respective control process (11-i) and/or a cyclic increment.

4. Apparatus (1) according to claim 1, wherein the control processes (11-i) are designed to newly determine the initial values and/or the cyclic increment during each initialisation.

5. Apparatus (1) according to one of claims 1 to 4, wherein the control processes (11-i) are designed to compute the initial values and/or the cyclic increment of the respective control processes (11-i) using a random value.

6. Apparatus (1) according to one of claims 1 to 4, wherein the control processes (11-i) are designed to compute the initial values and/or the cyclic increment of the respective control processes (11-i) using a hardware characteristic and/or a software characteristic of the respective control processes (11-i).

7. Apparatus (1) according to claim 1, wherein the control processes (11-i) are designed to define the cyclic increment in each cycle using a newly established random value.

8. Apparatus (1) according to one of claims 1 to 7, wherein the control processes (11-i) are each designed to assign to the at least one process value a second signature and to carry out the processing of the at least one process value using the computed first signature and the second signature,
wherein the second signature of the at least one process value is the same for all cycles of the cyclic processing.

9. Apparatus (1) according to one of claims 1 to 8, wherein the control apparatus comprises a processing facility (10), which is designed to carry out the number of control processes (11-i); and
a data memory (20), which is designed to store the process values of the number of control processes (11-i) and the corresponding signatures for the process values.

10. Process control system, with:
an apparatus (1) for control of a process plant according to one of claims 1 to 9;
a number of field devices, which each comprise at least one sensor and/or actuator;
wherein the control processes (11-i) of the control apparatus are each designed to generate control commands using sensor values of the field devices and/or to send control commands to the field devices.

11. Method for control of a process plant, wherein in a control apparatus a number of control processes (11-i) are carried out on common hardware, and each control process (11-i) carries out a cyclic processing of at least one process value,
wherein, for the at least one process value, in each cycle in each case, a first signature is computed and the processing of the at least one process value is carried out using the computed first signature,
wherein the control process (11-i) computes the first signature using a predetermined initial value and a cyclic increment,
wherein the number of control processes (11-i) are carried out based on an identical software code,
wherein for each control process (11-i) the initial value and/or the cyclic increment of the respective control processes are defined individually.

## Revendications

1. Dispositif (1) de commande d'une installation de processus, comprenant un dispositif de commande, qui est conçu pour exécuter plusieurs processus (11-i) de commande sur un hardware commun, dans lequel chaque processus (11-i) de commande exécute un traitement cyclique d'au moins une valeur de processus et dans lequel les processus (11-i) de commande sont conçus pour calculer une première signature pour la au moins une valeur de processus et pour exécuter le traitement de la au moins une valeur de processus en utilisant la première signature calculée, dans lequel les processus (11-i) de commande sont conçus pour calculer la première signature en utilisant une valeur initiale déterminée à l'avance et un incrément cyclique,
dans lequel les plusieurs processus (11-i) de commande sont réalisés sur la base d'un même code logiciel, dans lequel chacun des processus (11-i) de commande est conçu pour fixer individuellement la valeur initiale et/ou l'incrément cyclique du processus (11-i) de commande respectif.

2. Dispositif (1) suivant la revendication 1, comprenant un dispositif (21) de mémoire, qui est conçu pour mettre en mémoire, de manière rémanente, et mettre à disposition des valeurs initiales et/ou des incréments cycliques pour les plusieurs processus (11-i) de commande,
dans lequel les processus (11-i) de commande sont conçus pour déterminer, lors d'une initialisation pour la première fois, la valeur initiale et/ou l'incrément cyclique et le mettre en mémoire dans le dispositif (21) de mémoire.

3. Dispositif (1) suivant la revendication 2, dans lequel les processus (11-i) de commande sont conçus pour déterminer, lors d'une autre initialisation, la première signature en utilisant la valeur initiale et/ou un incrément cyclique mis dans le dispositif (21) de mémoire pour le processus (11-i) de commande respectif.

4. Dispositif (1) suivant la revendication 1, dans lequel les processus (11-i) de commande sont conçus pour déterminer à nouveau à chaque initialisation, la valeur initiale et/ou l'incrément cyclique.

5. Dispositif (1) suivant l'une des revendications 1 à 4, dans lequel les processus (11-i) de commande sont conçus pour calculer la valeur initiale et/ou l'incrément cyclique du processus (11-i) de commande respectif en utilisant une valeur aléatoire.

6. Dispositif (1) suivant l'une des revendications 1 à 4, dans lequel les processus (11-i) de commande sont conçus pour calculer la valeur initiale et/ou l'incrément cyclique du processus (11-i) de commande respectif en utilisant une propriété de hardware et/ou une propriété logicielle du processus (11-i) de commande respectif.

7. Dispositif (1) suivant la revendication 1, dans lequel les processus (11-i) de commande sont conçus pour fixer l'incrément cyclique dans chaque cycle en utilisant une valeur aléatoire déterminée à nouveau.

8. Dispositif (1) suivant l'une des revendications 1 à 7, dans lequel les processus (11-i) de commande sont conçus respectivement pour associer une deuxième signature à la au moins une valeur de processus et pour exécuter le traitement de la au moins une valeur de processus en utilisant la première signature calculée et la deuxième signature,
dans lequel la deuxième signature de la au moins une valeur de processus est la même pour tous les cycles du traitement cyclique.

9. Dispositif (1) suivant l'une des revendications 1 à 8, dans lequel le dispositif de commande comprend un dispositif (10) de traitement, qui est conçu pour exécuter les plusieurs processus (11-i) de commande ; et
une mémoire (20) de données, qui est conçue pour mettre en mémoire les valeurs de processus des plusieurs processus (11-i) de commande et les signatures correspondantes pour les valeurs de processus.

10. Système de commande de processus, comprenant :
un dispositif (1) de commande d'une installation de processus suivant l'une des revendications 1 à 9 ;
plusieurs appareils sur site, qui comprennent respectivement au moins un capteur et/ou un actionneur ;
dans lequel les processus (11-i) de commande du dispositif de commande sont conçus respectivement pour créer des instructions de commande, en utilisant des valeurs de capteur des appareils sur site et/ou pour envoyer des instructions de commande à des appareils sur site.

11. Procédé de commande d'une installation de processus, dans lequel on exécute, dans un dispositif de commande, plusieurs processus (11-i) de commande sur un hardware commun, et chaque processus (11-i) de commande exécute un traitement cyclique d'au moins une valeur de processus,
dans lequel, pour la au moins une valeur de processus, on calcule, dans chaque cycle, respectivement une première signature et on exécute le traitement de la au moins une valeur de processus en utilisant la première signature calculée,
dans lequel les processus (11-i) de commande calculent la première signature en utilisant une valeur initiale déterminée et un incrément cyclique,
dans lequel on exécute les plusieurs processus (11-i) de commande sur la base d'un même code logiciel,
dans lequel, pour chaque processus (11-i) de commande, on fixe individuellement la valeur initiale et/ou l'incrément cyclique du processus de commande respectif.
